# EUROPEAN PATENT APPLICATION

(11) **EP 4 769 162 A2**
(43) Date of publication of application: **01.07.2026**
(21) Application number: 25215382.0
(22) Date of filing: 12.11.2025
(51) Int. Cl.: G06F 13/16, G06F 13/42, G06F 12/0817

(54) **ON-PACKAGE MEMORY WITH UNIVERSAL CHIPLET INTERCONNECT EXPRESS**

(30) Priority: 26.12.2024 US 202419002532
(71) Applicant: Intel Corporation, Santa Clara, CA 95054 (US)
(72) Inventor: DAS SHARMA, Debendra, Saratoga, 95070 (US); ONUFRYK, Peter, Flanders, 07836 (US); CHOUDHARY, Swadesh, Mountain View, 94041 (US)
(74) Representative: Maiwald GmbH

(57) **Abstract**

This disclosure describes systems, methods, and devices related to enhanced memory integration. The device may include a compute chiplet configured as a System-on-a-Chip (SoC). The device may include a logic die circuitry coupled to the compute chiplet through a high-speed link. The device may include a memory interface that connects the logic die circuitry to on-package memory. The device may include control circuitry within the logic die circuitry configured to treat the on-package memory as a memory-side cache for an off-package memory. The device may dynamically migrate memory pages between the on-package memory and the off-package memory based on memory access patterns. The device may facilitate efficient data management, optimize memory utilization, and support scalable memory architectures for improved performance.

## Description

### BACKGROUND

Memory interconnects face challenges in scaling bandwidth and ensuring reliability. Innovations like UCIe address these issues by optimizing communication and enhancing RAS features.

### BRIEF DESCRIPTION OF THE DRAWINGS

FIGs. 1A-1E, 2A-2D, and 3A-3D depict illustrative schematic diagrams for enhanced memory integration, in accordance with one or more example embodiments of the present disclosure.
FIG. 4 illustrates a flow diagram of a process for an enhanced memory integration system, in accordance with one or more example embodiments of the present disclosure.
FIG. 5 illustrates an embodiment of a block diagram for a computing system including a processor, in accordance with one or more example embodiments of the present disclosure.
FIG. 6 illustrates an example system, in accordance with one or more example embodiments of the present disclosure.
FIG. 7 illustrates an example system implemented as system on chip (SoC), in accordance with one or more example embodiments of the present disclosure.

Certain implementations will now be described more fully below with reference to the accompanying drawings, in which various implementations and/or aspects are shown. However, various aspects may be implemented in many different forms and should not be construed as limited to the implementations set forth herein; rather, these implementations are provided so that this disclosure will be thorough and complete, and will fully convey the scope of the disclosure to those skilled in the art. Like numbers in the figures refer to like elements throughout. Hence, if a feature is used across several drawings, the number used to identify the feature in the drawing where the feature first appeared will be used in later drawings.

### DETAILED DESCRIPTION

The following description and the drawings sufficiently illustrate specific embodiments to enable those skilled in the art to practice them. Other embodiments may incorporate structural, logical, electrical, process, algorithm, and other changes. Portions and features of some embodiments may be included in, or substituted for, those of other embodiments. Embodiments set forth in the claims encompass all available equivalents of those claims.

Scaling memory bandwidth for on package memory by mapping LPDDR6 and HBM4 protocols to UCIe. In addition, CXL.mem optimizations are presented to offer a Flit based transport alternative (where the memory controller is instantiated on the logic die circuitry aggregating bandwidth across multiple memory devices).

Previous solutions are not known at this time that utilize UCIe in this manner. Achieving native scaling of LPDDR6 and HBM4 bandwidth has presented significant challenges.

Example embodiments of the present disclosure relate to systems, methods, and devices for On Package memory with UCIe - scaling memory bandwidth and RAS.

UCIe enhances memory interfacing by standardizing connections between processors and various memory types, such as LPDDR6 and HBM4. It increases bandwidth by efficiently aggregating data transfer across multiple memory devices, leading to improved performance. Additionally, UCIe reduces latency by integrating memory controllers on the same package, facilitating faster communication. This approach offers flexibility and scalability, allowing for seamless integration of different memory technologies and supporting future upgrades and innovations.

In one or more embodiments, an enhanced memory integration system may facilitate one or more mechanisms:
- Mapping LPDDR6 and HBM4 protocols to a UCIe Link (to a native device, or to a logic die circuitry aggregating multiple devices), over an asymmetric UCIe Link (i.e. different number of Tx and Rx Lanes). In other words, Mapping Protocols: LPDDR6 and HBM4 protocols are mapped to a UCIe Link, which can connect to a native device, or a logic die that aggregates multiple devices. This can be done over an asymmetric UCIe Link, meaning there are different numbers of transmit (Tx) and receive (Rx) lanes. For example, using more lanes for data transmission than reception.
- CXL.mem optimizations for fabric to memory controller protocol over UCIe to get higher efficiency from the UCIe Link (both over a symmetric or an asymmetric Link). In other words, Enhancements are made to the fabric-to-memory controller protocol over UCIe to achieve higher efficiency. This works for both symmetric and asymmetric links, improving data handling. For instance, optimizing data flow to reduce bottlenecks.
- Memory device optimizations for supporting higher throughput over UCIe natively (using LPDDR6 as an example). In other words, adjustments are made to support higher throughput over UCIe natively, using LPDDR6 as an example. This involves tuning memory settings to maximize data transfer rates.
- RAID-5 application to a memory subsystem using an example of 9 devices per subsystem. In other words, RAID-5 is applied to a memory subsystem, using an example of 9 devices per subsystem. This setup provides data redundancy and improved reliability. For example, distributing data across multiple devices with parity for error correction.
- RAID-5 application and optimizations across multiple memory subsystems within a package using an example of 4 subsystems in a System-in-Package (SiP). In other words, optimizations are made across multiple memory subsystems within a package, using an example of 4 subsystems in a System-in-Package (SiP). This enhances overall system reliability. For instance, coordinating data protection across different memory groups.
- Future application of UCIe-3D to memory device stacking in order to expand memory bandwidth scaling even further. In other words, plans to use UCIe-3D for memory device stacking to further expand memory bandwidth scaling. This involves layering memory devices to increase capacity and speed.

RAID-5 is a storage technology that uses striping with parity. It distributes data across multiple drives, with one drive storing parity information. This setup allows for data recovery if one drive fails, providing a balance of performance, storage efficiency, and fault tolerance.

This disclosure proposes a novel on-package memory interconnect using UCIe, delivering power-efficient performance. To improve bandwidth density further in the short-term for planar interconnects (2D/2.5-D), UCIe should increase the operating frequency while continuing to be bump-limited with constant power efficiency. Further bandwidth density improvement can be achieved in planar interconnects by stacking multiple UCIe ports on the same shoreline, at the expense of increased routing layers on the package, which is a reasonable trade-off. Since UCIe scales with bump-pitch, it will provide for future bandwidth demand.

For example, reducing the bump pitch from 55 micrometers (µm) to 25 µm significantly increases bandwidth density by allowing more connections in the same area, enhancing data transfer paths. This change results in approximately a five-fold improvement in data throughput while maintaining power efficiency, effectively meeting growing data demands. To enhance reliability, deploying spare DRAM modules ensures continuous operation in case of failure. Additionally, using RAID-5 provides data striping with parity across multiple drives, allowing for data recovery if one drive fails. External memory backup offers further protection by storing copies of data externally, safeguarding against data loss. These strategies collectively address the need for higher bandwidth and improved reliability in modem computing systems.

The above descriptions are for purposes of illustration and are not meant to be limiting. Numerous other examples, configurations, processes, algorithms, etc., may exist, some of which are described in greater detail below. Example embodiments will now be described with reference to the accompanying figures.

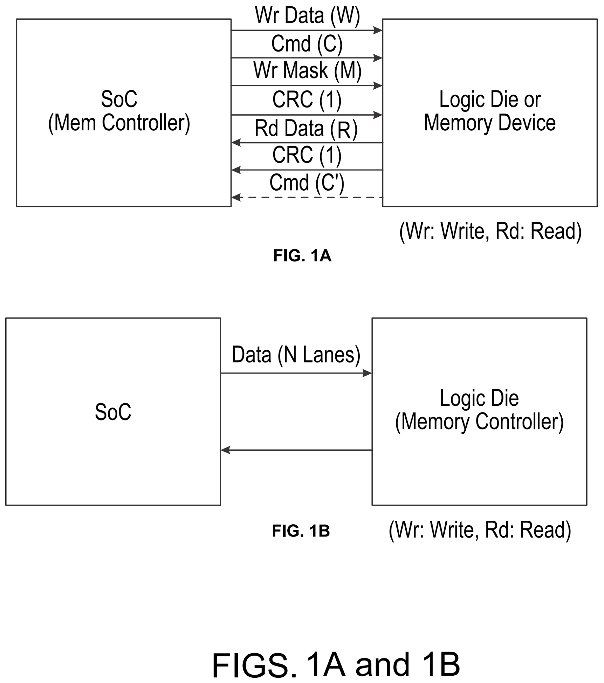

FIGs. 1A-1E, 2A-2D, and 3A-3D depict illustrative schematic diagrams for enhanced memory integration, in accordance with one or more example embodiments of the present disclosure.

A virtuous cycle of innovation has been experienced for many decades, where dramatic improvements in compute capability, primarily driven by extraordinary advances in process and packaging technologies, have enabled diverse applications. Examples of new applications are enhancing the entire mainstream compute continuum today including smart phones, tablets, personal computers, enterprise servers, cloud computing, edge computing, automotive, internet of things, and supercomputing. There continues to be an insatiable demand for heterogeneous computing, memory bandwidth and capacity, and interconnect bandwidth across the compute continuum.

Heterogeneous integration of memory and compute/communication chiplets on package has been a critical enabler for sustaining cost-effective and power-efficient performance across the compute continuum. For smartphones, tablets, laptops, and personal computers (PC), it is common to integrate LPDDR (low-power double data rate) DRAM (dynamic random-access memory) on package, using the off-package LPDDR standard. The main driver here is constrained form factor, lower power, lower cost, and lower latency.. For the server, HPC, AI usages, it is primarily high bandwidth memory (HBM) that is used to deliver high bandwidth on-package for all types of compute: CPU (Central Processing Unit), GPU (Graphics Processing Unit), accelerators, FPGA (Field Programmable Gate Array). Typically, the system-on-chip (SoC) die connects to a buffer base-die connected to HBM. The buffer die connects to vertical stacks of HBM DRAMs (4, 8, 12 high), using thousands of data wires connected using TSVs, running at 1/4th of the HBM frequency, arranged as multiple channels. Even though HBM memory is 5-10x more expensive than LPDDR memory on a capacity basis, designs deploy HBM memory due to its higher bandwidth per capacity. For example, 8 24-Gb DRAM dies on a 4-channel LPDDR5 package (e.g., 496BGA JEDEC Ball) has 24 GB capacity and 51.2 GB/s of data bandwidth (16-data x 4-channel x 6.4-Gbps) whereas a 8x HBM3e comprising of 24-Gb DRAM dies offers 24-GB capacity and 1024 GB/s data bandwidth (1024-data x 8-Gbps), roughly a 20x higher bandwidth for same capacity. Similar trends are expected with the next generation LPDDR628 and HBM4.

Applications with an annual exponential growth in compute demand, have become memory limited as HBM bandwidth and capacity has not been scaling to meet the compute demand. In addition to inefficient use of compute resources, this is having an adverse impact on power consumption and cost of the compute infrastructure. The power consumed by data centers has already become a significant percentage of the total world power production and expected to get worse over time, creating a sustainability challenge. Thus, there is a need to explore interconnect solutions that will deliver high bandwidth in a cost-effective and power-efficient manner across all segments of compute.

Memory interfaces (e.g., LP-DDR, HBM), continue as parallel, bi-directional bus, with different sets of wires (e.g., command, data) running at different frequencies, to be DRAM-process friendly. The downside of this approach is lower bandwidth and pin/bump inefficiency due to substantially lower frequencies compared to their counterparts in on-package (UCIe) and off-package (e.g., Compute Express Link, CXL³⁵⁻⁴³). Bandwidth scaling is precisely the reason why the industry moved from a PCI (Peripheral Component Interconnect) bus to PCI-Express, a serial, point-to-point, full-duplex, differential interconnect, more than two decades ago, along with scale-up cache-coherency interconnects⁴⁴. Delivering substantially higher memory bandwidth along with form-factor advantages is the primary reason the industry is moving towards CXL as a memory attach at a platform level. It is believed that the time has come for on-package memory to undergo a similar transformation by using the unidirectional, serialized interconnect UCIe as the basic building block with optional off-package memory for additional capacity, when needed, within the existing silicon area and shoreline constraints.

An enhanced memory integration system may facilitate several approaches to overcome the memory bandwidth and capacity bottleneck by evolving Universal Chiplet Interconnect Express (UCIe), using standard and advanced packaging, as planar interconnects. In this disclosure, the architecture, micro-architecture, protocol, bump map enhancement (when applicable), and reliability improvements are provided for the included approaches as well as performance and reliability analysis. This disclosure also discusses the evolution of these approaches to construct future System-in-a-Package (SiP), including seamless integration with off-package high-capacity memory.

UCIe 1.0 and 2.0 specifications define two types of packaging for planar interconnect: standard or 2D (UCIe-S) and advanced or 2.5D (UCIe-A). The standard package is used for cost-effective performance. The advanced packaging is used for power-efficient performance. UCIe 2.0 specification additionally defines vertical (3D) interconnect. This Article will primarily focus on planar interconnects (2D, 2.5D) for on-package memory since that is the prevalent method of connecting with DRAMs whereas UCIe-3D can be used to connect to SRAMs vertically as an extension of the caching hierarchy.

UCIe is a layered protocol. The physical layer (PHY) specifies multiple data rates, bump map, channel model, electrical signaling, clocking, link training, sideband, circuit architecture, etc. The basic unit is a module which comprises of N single-ended, unidirectional, full-duplex 'Data' lanes (N=16 for UCIe-S and N=64 for UCIe-A), one single-ended lane for valid, one lane for tracking, a differential forwarded clock per direction for the main-band. The sideband consists of 2 single-ended lanes (one data and one 800 MHz forwarded-clock) per direction. The sideband interface is used for status exchange to facilitate link training, register access, and diagnostics. Multiple modules (1, 2, or 4) can be aggregated to deliver more performance per link. The D2D adapter is responsible for reliable delivery of data through its cyclic redundancy check (CRC) and link level retry mechanism using a 256-Byte flow-control unit (FLIT). The characteristics and target performance metrics of UCIe highlight its adaptability and efficiency. At the protocol layer, UCIe supports a variety of protocols, including the proposed approaches, through the use of Flit Mode. This mode enables structured and efficient data transfer, ensuring high performance and scalability for diverse application requirements. By accommodating different protocols, UCIe provides a flexible communication framework optimized for modern computing workloads.

Referring to FIGs. 1A-1E, there is shown the proposed approach using UCIe for on-package memory.

Referring to FIG. 1A, there is shown mapping of LPDDR6 and HBM4 protocols on UCIe Link (C'=0) and CXL.Mem on Asymmetric UCIe. For LPDDR6 mapping over UCIe (between SoC and Logic Die): W=24, C= 10, M = 2, R=36. This is effectively read bandwidth is 1.5x that of write bandwidth, adding up to a total of 37 Tx and 37 Rx Data Lanes which is effectively a symmetric UCIe but with a few extra bumps over the 32 Lane configuration. When a UCIe-capable LPDDR6 die (with two x12 devices on two sub-channels) connects to an SoC or a Logic die with UCIe-S PHY: W = 12, C = 4 or 6 (depending on how many changes it is possible to make inside the LPDDR6 die to support simultaneous read/write accesses in each device on different bank groups), M = 1, R = 24. Here, there is twice the read bandwidth than write. UCIe runs at the LPDDR6 frequency of 8-12 GT/s to be DRAM process friendly. The UCIe Link is asymmetric with 18/20 Lanes in one direction and 25 Lanes in the other direction. So, there is a total of 43 to 45 data bumps (instead of 32) which needs to be laid out by adding extra rows to the x32 UCIe-S and stacking two of those on the SoC/ Logic die side to derive better shoreline density with the same shoreline as UCIe 1.0. For HBM4 over UCIe (SoC and logic die), two combinations are possible: (i) W = 36, C = 24, M = 4, R = 72 for a total of 138 Lanes in both directions, (ii) W= 18, C= 12, M = 2, R = 36 for a total of 70 Lanes in both directions; the first one is slightly better since it amortizes the same CRC wire over more data lanes but the latter offers better granularity. Both are close enough to 128 or 64 Lanes of UCIe (Tx+Rx combined) and hence can be done by adding a few rows by keeping the same shoreline as UCIe. For CXL.Mem over asymmetric UCIe (Soc to Logic Die, memory controller on Logic die): W=16, C=6, M=0, C'=2, 6 Reserved bumps of 64 Data bumps.

Referring to FIG. 1B, there is shown CXL.Mem (optimized or unoptimized) or CHI on symmetric UCIe 1.0 Links.

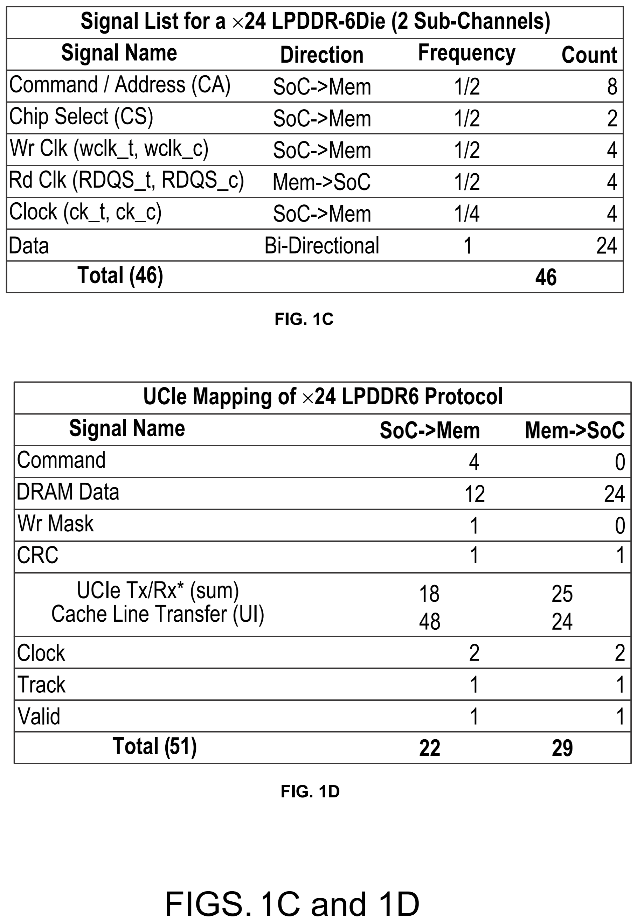

Referring to FIG. 1C, there is shown a signal list of LPDDR6, reflecting 2 sub-channels and 24 DQs (vs 16 DQs with 1 channel in LPDDR5) along with removal of DBI/DM.

Referring to FIG. 1D, there is shown LPDDR6 signals mapped to UCIe after adjusting for the frequency differences with native LPDDR6 signals. CA and CS for each subchannel is mapped to the same command wire. Twice the bandwidth is provisioned for read over write. Hence there are 24 wires for Mem -> SoC direction vs 12 wires for SoC->Mem direction. For 100% writes, this approach yields half the bandwidth of native LPDDR6 with 24 bi-directional wires at the same frequency in e. However, for reads there is the same bandwidth, and there will be higher bandwidth by performing reads and writes simultaneously. When compared to FIG. 1C, there are fewer wires for command/ chip select and write mask as UCIe runs all wires at the same frequency. The LPDDR6 protocol and timings are maintained as-is in this mapping.

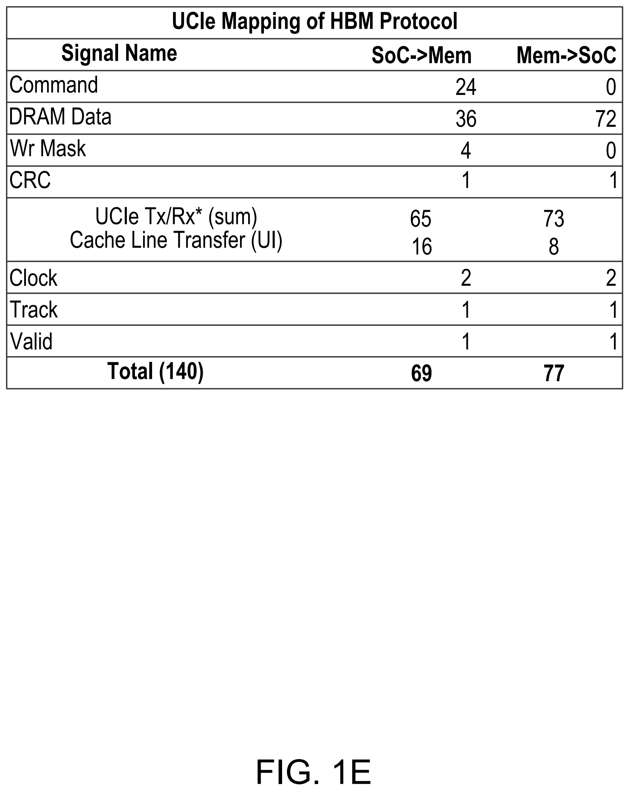

Referring to FIG. 1E, there is shown HBM4 signals mapped to UCIe. There is an allotment of twice read bandwidth compared to write. The HBM4 protocol and timings are maintained as-is in this UCIe mapping.

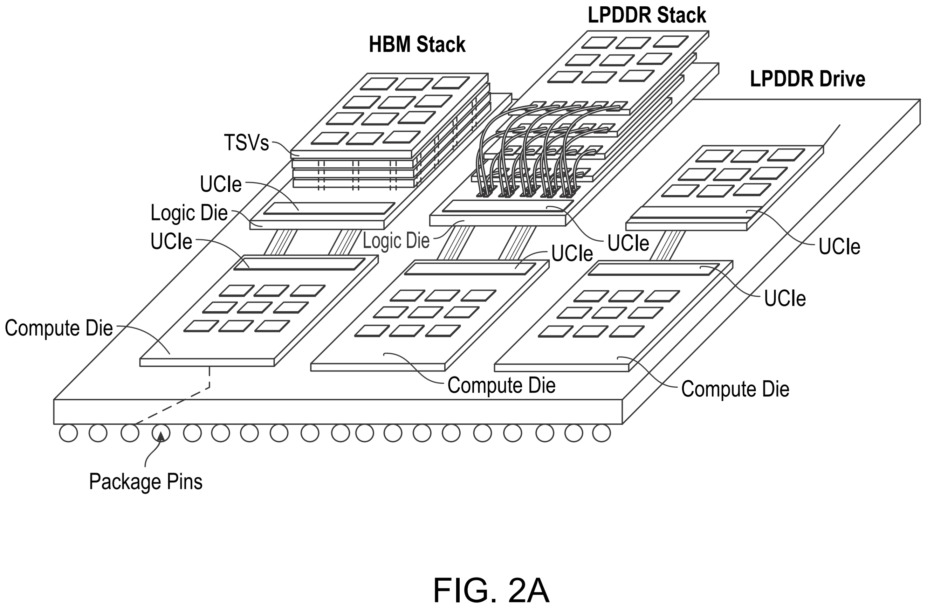

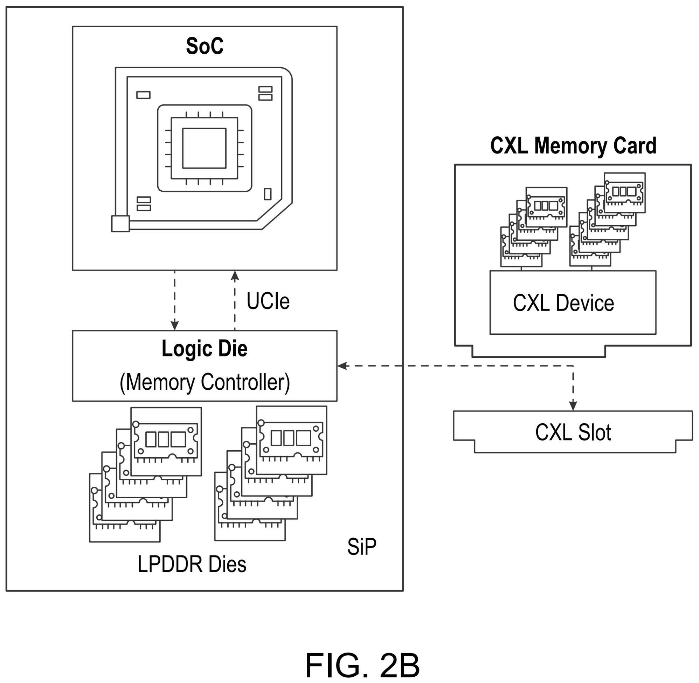

In one or more embodiments, an enhanced memory integration system may facilitate UCIe-Memory, an interconnect to connect a compute (or communication) chiplet (referred as System-on-a-Chip, SoC, in this Article) with on-package memory, using UCIe electrical signaling. A memory die (e.g., LPDDR6) can directly connect to a SoC (FIG. 2A) using UCIe-Memory for segments such as hand-held computing devices. Here the memory controller resides in the SoC. UCIe-Memory can also be used to connect a SoC to a logic die, which in turn connects to memory dies (FIG. 2A), such as LPDDR or HBM or any emerging memory technology. In this approach, the memory controller may either reside in the SoC (the logic die performs (de)multiplexer of signals between the SoC and the memory dies) or the memory controller resides in the logic die. The latter has the advantage of freeing up precious silicon real estate occupied by the memory controller(s) in the SoC for compute functionality. With a memory controller, the logic die can also act as a memory hub (see FIG. 2B), connecting to external memory through DDR or CXL, and managing the on-package memory as a memory-side cache for enhanced performance.

UCIe-Memory can have multiple options, as described below. Some options rely on the existing symmetric UCIe (16 or 64 data lanes in each direction per cluster). Enhancements are proposed for 'Asymmetric UCIe' recognizing the need for higher read bandwidth than write for most applications and commands are only issued from the memory controller to memory.

Symmetric UCIe and asymmetric UCIe refer to the configuration of data lanes in a UCIe link. In a symmetric UCIe setup, there is an equal number of transmit (Tx) and receive (Rx) lanes, allowing for balanced data flow in both directions. This configuration is suitable for applications requiring uniform data exchange. In contrast, an asymmetric UCIe setup features an unequal number of Tx and Rx lanes, optimized for scenarios where data flow is heavier in one direction. This is particularly useful for applications with specific data transmission needs, such as when more data is being sent than received.

In one or more embodiments, it is proposed to enhance UCIe PHY to operate at a multiple of the underlying DRAM frequency or run the DRAM at a fractional UCIe frequency. This results in better bandwidth efficiency and avoids any asynchronous clock domain crossings. For example, if DRAM runs at 8333 MT/s, it can run at 8 GT/s and UCIe can run at 8/16/32 GT/s or if the DRAM runs at 10GT/s, the UCIe link can run at 10/20/40 GT/s.

The UCIe sideband interface can be used to access configuration registers, report error/ events/ performance monitors, and signal interrupts as needed in all the proposed approaches below. These are not performance-critical; the sideband bandwidth of 800 Mb/s/direction is enough to meet these needs while simplifying the main data path by removing CXL.io⁴¹⁻⁴⁴. If the logic die wants to participate in high-performance direct memory access (DMA) for applications such as near-memory processing and/or initiating memory accesses, it can implement the Unordered I/O (UIO) semantics which require three flow-control classes (for read, write, completions) in each direction⁴¹⁻⁴⁴.

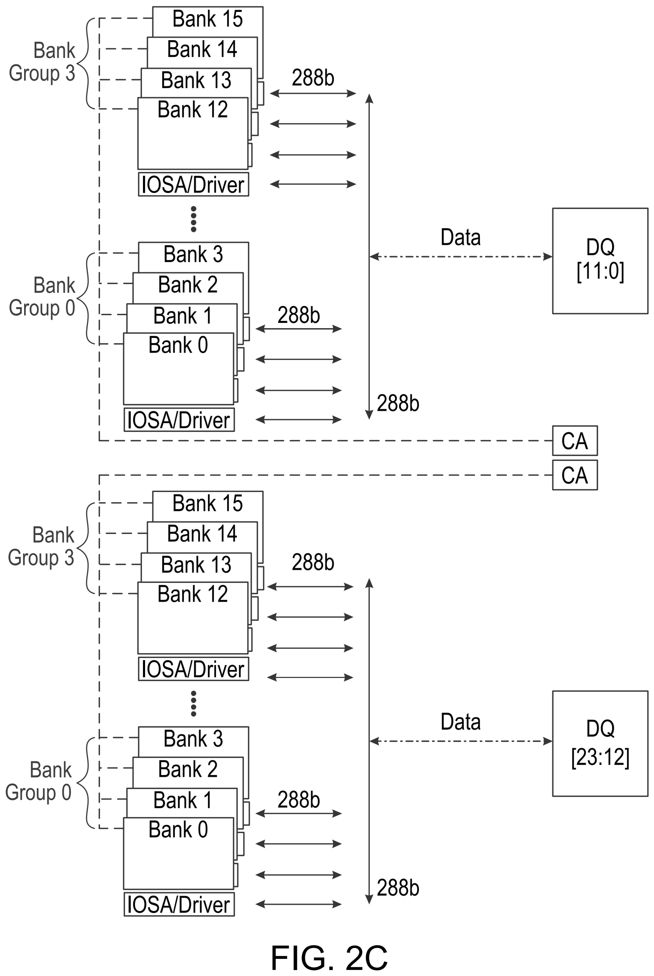

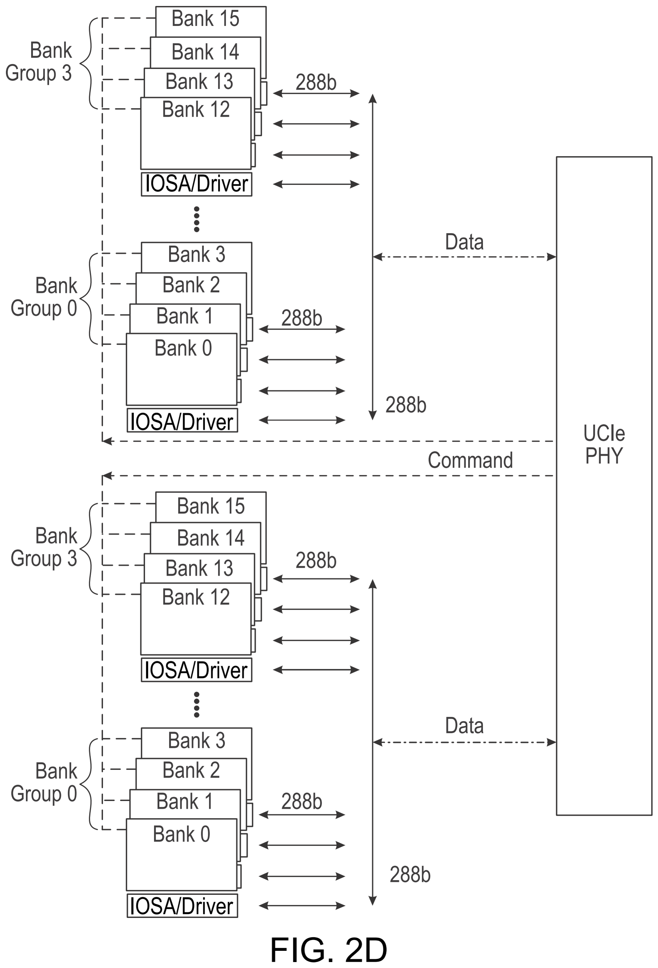

LPDDR6 protocol mapping on Asymmetric Enhanced UCIe: Here the memory controller resides in the SoC. The proposed UCIe module size is 74 data Lanes (vs 32/128 for existing UCIe-S/A), as shown in Fig 2c. The UCIe link runs at a multiple of LPDDR6 frequency. The logic die connects to native LPDDR6 dies or LPDDR6 dies with UCIe PHY (FIG. 2A). The native LPDDR6 signal list (FIG. 1C) is mapped to UCIe-Memory (FIG. 1D). If the LPDDR6 die (FIG. 2C) is modified to support UCIe PHY natively, the UCIe module size is 43 or 45 data lanes (FIG. 1A) and the UCIe PHY can support parallel read/ write to each device array simultaneously (FIG. 2D).

HBM3/4 protocol mapping on Asymmetric Enhanced UCIe: Here the memory controller resides in the SoC, which connects to a logic die, that in turn connects to the stacked HBM memory (FIG. 1A, 2A). The proposed UCIe module size is 138 data Lanes, with a 70-lane variation (FIG. 2C). Since the interconnect between the logic die and the HBM 3D memory stack runs slower (1-2 GT/s), it is expected for it to run at a fraction of UCIe frequency (e.g., 1/16 or 1/32). Details of the protocol mapping appear in FIG. 1E.

FIGs. 2A-2D, illustrate the proposed configurations and approaches with UCIe-Memory to meet the performance needs.

Referring to FIG. 2A, there is shown the proposed configurations with UCIe-Memory: (i) SoC connects to a logic die using UCIe which then connects vertically to an HBM stack using TSVs (through silicon vias), as shown in the left; (ii) SoC connects to a logic die using UCIe, as shown in the middle. The logic die then connects to a set of vertically connected LPDDR dies using wire-bonding. The LPDDR dies can also be connected using planar interconnects. The logic die to LPDDR dies can be either native LPDDR bus (with one or multiple dies forming a rank) or LPDDR dies with an UCIe PHY, as shown in iii; (iii) SoC connects directly to an LPDDR die using UCIe. In these three cases, the likely intercept points would be HBM4 and LPDDR6.

Referring to FIG. 2B, there is shown SoC connects to Logic die using UCIe running CXL.Mem protocol. The Logic die can host either LPDDR dies or HBM dies or any other type of memory on-package using vertical/ planar interconnects, including UCIe. The Logic die can also connect to an external memory using CXL or LPDDR or any other interconnect. With external memory, the logic die can treat the on-package memory as a memory-side cache and/or a flat memory with a part being on-package and part off-package. With a flat memory implementation, it may deploy mechanisms to migrate memory across the on-package and off-package depending on the access patterns. For example, if a page in CXL memory starts getting more frequently accessed, it can move it on-package, swapping with some on-package page that is least accessed, if needed.

Referring to FIG. 2C, there is shown micro-architecture of LPDDR6 die showing the two sub-channels. 288 data bits are accessed from a bank with each access. A x24 device consists of two x12 sub-channels. Each sub-channel has four bank groups and the corresponding command and data IOs are shared.

Referring to FIG. 2D, there is shown the proposed enhancements to LPDDR6 die with a native UCIe PHY. There are twelve Lanes for Data and one Lane for CRC in each direction. Additionally, there are four lanes for command and one Lane for write mask in the SoC to Device direction. In this example, the UCIe PHY runs at twice the data rate of native LPDDR6 DQ wires in FIG. 2C, resulting in a simple 2:1 serialization/deserialization, while being DRAM process friendly. This enables obtaining the same bandwidth from the device using UCIe as FIG. 2C. It is also possible to add more paths to the UCIe PHY from the banks and operate the UCIe PHY at a higher data rate to support simultaneous read/write access across the different bank-groups in each subchannel to get more bandwidth from the same device at the expense of additional logic per bank-group, if the DRAM process can support the higher data rate of UCIe PHY.

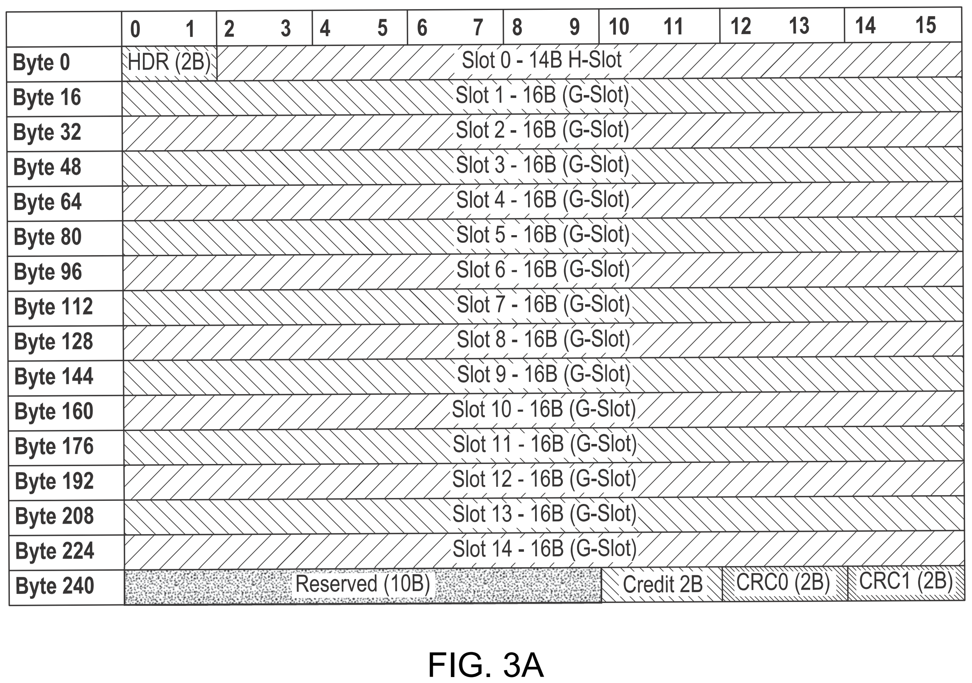

FIGs. 3A-3D illustrate Flit Layout for various UCIe-Memory approaches.

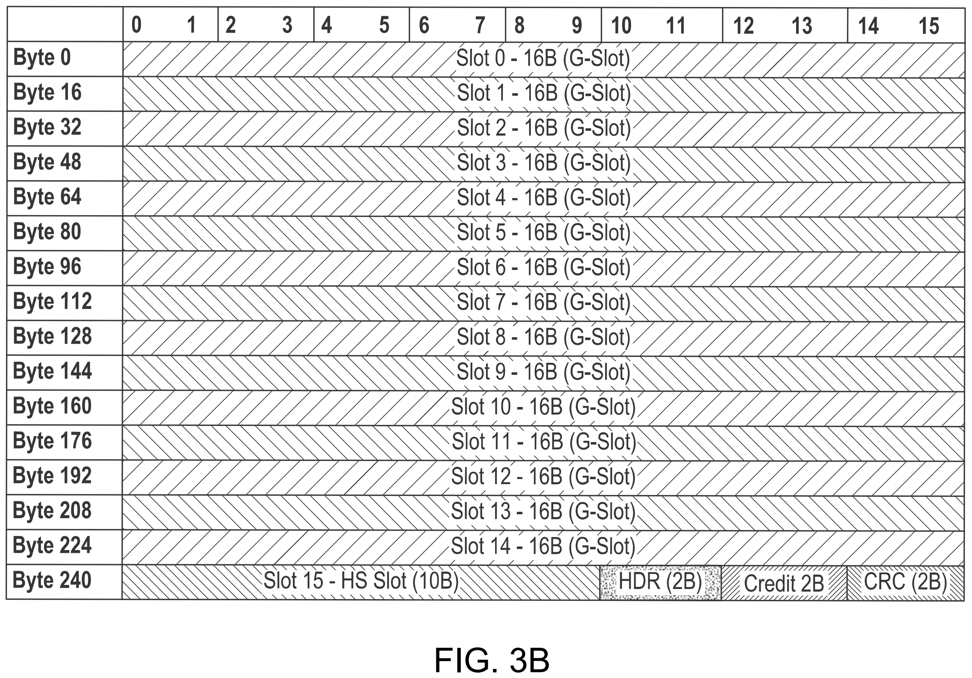

Referring to FIG. 3A, there is shown 256-Byte Flit layout of UCIe. The HDR contains information needed for identifying traffic type using a protocol identifier field (e.g., CXL.Mem, CXL.io, NOP Flit, etc.) and reliable Link operation such as sequence number, ack/nak, etc. The first 2B of CRC protects the Bytes 0-127 and the second 2B of CRC protects the rest. The Credit field is used for credit management by the transaction layer. Slots are the basic unit of transfer: there is one H-Slot and 14 G-Slots; they follow the definitions from the CXL Specification. Even though the CRC appears at the end, the memory controller can schedule the memory accesses as soon as it receives the command to reduce the latency on reads. If a read occurred in error, the data read is ignored. Writes are not latency sensitive and may be buffered to ensure they pass CRC check and valid lane check. The same mechanism can be deployed for FIG. 3B. Commands (Request/ Response) can be sent in H- or G-slot whereas data is sent only on G-slot. As described in e, each SoC->Mem Request is 72 bits and each Mem-> SoC response is 26 bits. Thus, one request or two responses can fit in each slot. The Flit scheduling mechanism optimizes by packing as many headers as possible into an H-slot and leave as many G-slots for data to drive best efficiency in the Link.

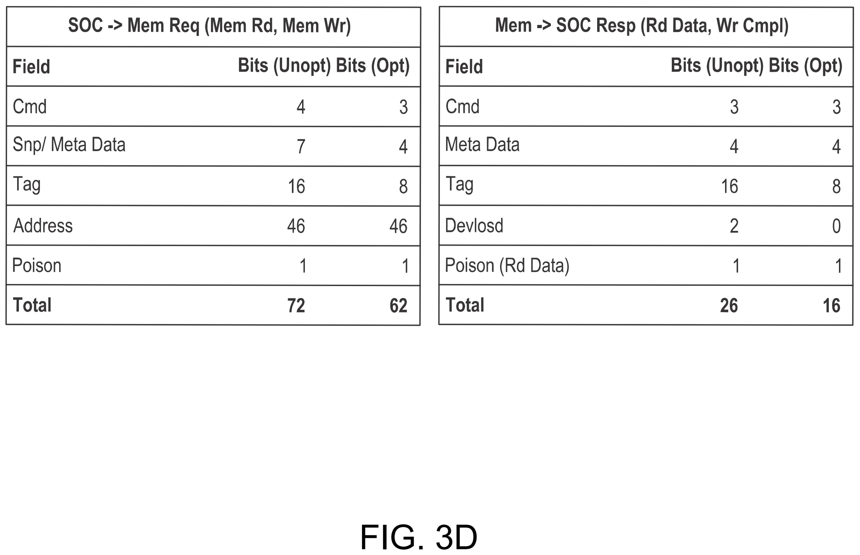

Referring to FIG. 3B, there is shown 256-Byte Flit layout with optimization resulting in 15 G-Slots and one HS-Slot. Here the HDR and Credit are the same as FIG. 3A; but the 2B CRC covers the entire Flit. While the HDR at the end works well for reliable link operation, the identification of the traffic type may pose a challenge if multiple protocols (beyond CXL.Mem, such as CXL.io) are supported and latency is critical. It is proposed to overcome that by the receiver parking the protocol identifier of received Flits with NOP after Link (re)training, and the protocol identifier in the HDR bytes identifies the protocol for the next Flit. Error handling and Flit packing is like FIG. 3A, except, as shown in FIG. 3D, due to optimization, it is possible to fit one request or four responses in an HS-slot. It is possible to fit two requests in a G-slot as an additional optimization, though this is not considered in the performance analysis.

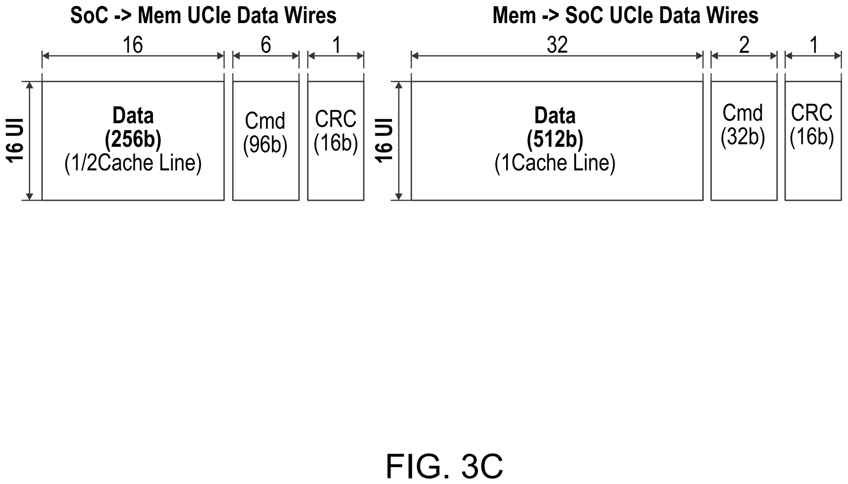

Referring to FIG. 3C, there is shown the transaction layer command fields of CXL.Mem - the unoptimized ones are from the CXL/ UCIe specifications, the optimized values represent a reduction given that the scope is limited to one connection which is on-package. For example, while an external CXL topology that needs to scale to thousands of servers needs to have 16-bit tag field to ensure enough outstanding transactions, for a local memory access having 8 bits is enough since it is not possible to have even close to a hundred outstanding transactions with a logic die which is basically a buffer.

CXL.Mem without optimization on Symmetric UCIe: Here the memory controller resides in the logic die. The SoC connects to logic die using standard UCIe PHY (x16/x64 for UCIe-S/A, FIG. 1B). The logic die can either connect to an HBM stack or LPDDR6 stack (FIG. 2A). The logic die can connect to external memory using LPDDR6 or CXL or off-package UCIe link and act as a memory hub (FIG. 2B). FIG. 3A shows the Flit layout and FIG. 3D the command layout.

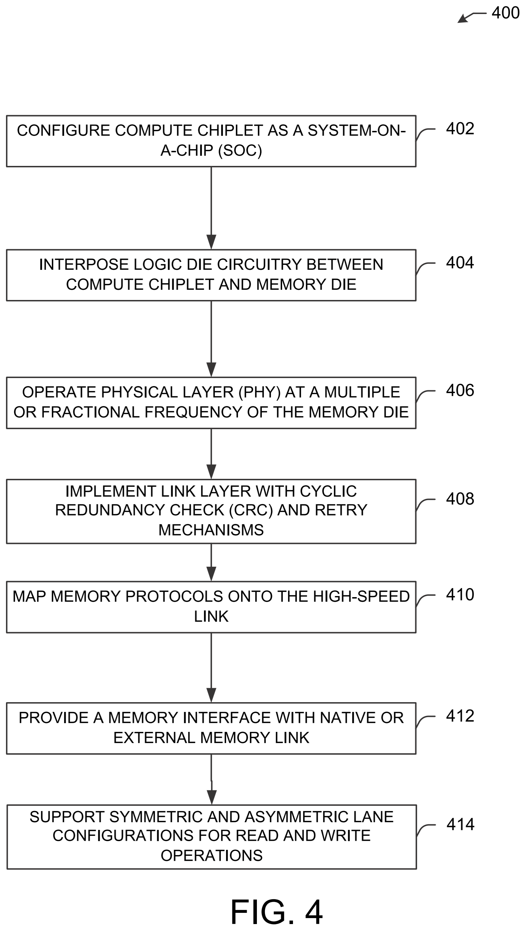

CXL.Mem with optimization on Symmetric UCIe: This approach is like the prior approach with optimizations to the Flit (FIG. 4B, 4D).

CXL.Mem on Asymmetric UCIe: In this approach, the memory controller resides in the logic die. Twice the number of wires is allotted for read versus write data to optimize performance since the traffic pattern is predominantly reads (even most writes are read-modify-write operations). FIG. 1C and FIG. 3C describe the Link and Flit arrangement, respectively.

Coherent Hub Interface (CHI) on Symmetric UCIe: Here, the memory controller resides in the logic die (FIG. 1B) and the CHI Flit Mapping.

### Enhancements for Reliability and Availability:

LPDDR6 (and LPDDR5) offers better bandwidth per die than DDR5 (e.g., >50% for LPDDR5 over DDR5) with lower power (~15% savings by LPDDR5 over GDDR6) at lower cost⁴⁶ since it activates a smaller number of DRAM dies per access as it bursts more bits per device and uses wire bonding rather than the expensive TSVs deployed by HBM. However, despite these advantages, DDR5 is deployed in enterprise applications due to its high reliability and availability. This stems from the fact that each cache line access comes from 9 or 18 devices (which makes it inefficient in power and performance due to lower burst length per device). Hence, rank-level ECC (error-correcting code) across these devices offer advanced capabilities like single-device error correction, double-device error detection, etc. LPDDR5/6 and HBM3/4 access a cache line (64 Bytes) from a small number of dies (1 or 2). Hence, a die failure cannot be ECC-corrected in a cost-effective or power-efficient manner. For example, each access from LPDDR6 is 288 bits of which 256 bits is data and 32 bits is meta-data (for ECC, directory, etc.). To support single-device error correctly, there is a need for at least 50% overhead for DRAMs (since a cache line can be spread across two LPDDR6 dies, 32B each), which is undesirable as both cost and power increase by 50%. With 32 bits, however, it is possible to deploy good burst error correction (to handle consecutive bit flips) and have a very robust error detection mechanism for the rest of the errors, even after allotting some bits to meta-data like directory, etc. The run-time reliability requirement of a lot of applications can be met with this level of ECC, which explains the widespread commercial deployment of LPDDR and HBM.

Another aspect of memory is permanent faults. Permanent faults manifest as bit, word, row, column, bank, and multi-bank (full chip) failures. Some failures such as bit, word, row, and column can be handled by ECC and/or replacement with a spare row/ column to some extent, beyond which the die becomes unusable. Since these are on-package memory, unlike on-board DIMMs (dual in-line memory modules), they cannot be replaced. Thus, these failures will adversely impact the mean-time-to-failure (MTTF) of these expensive SiPs.

In one or more embodiments, an enhanced memory integration system may facilitate that the RAID-5 (redundant array of inexpensive disk) technique across memory dies to provide better MTTF and reliability with lower additional cost and power. In this approach, a spare memory die is deployed, and where the parity computed across a set of addresses is stored. This parity will help recover the contents of the failed DRAM.

In one or more embodiments, also it is possible to simply deploy a spare die in each memory subsystem (without the RAID-5 computation) as explained next.

For memory hubs, one can perform a write-through operation to the off-package memory on every write. The completion may be signaled as soon as the write is queued in the logic to ensure fast commit for the write. With this arrangement, one may not make a RAID-5 arrangement (and avoid the performance penalty on writes, as explained later), just have the extra die as a spare die to recreate the content of the failed die by reading the contents from off-package memory. Greater than one memory device failure results in potential performance loss as it reduces the size of the memory side cache; but the SiP can continue to function with the error reported to system management software.

In one or more embodiments, the performance of the proposed approaches is evaluated with that of existing approach of using LPDDR and HBM on-package memory. Since LPDDR6 and HBM4 specifications are in flight, the implementation data from LPDDR5 and HBM3 is used to project the different metrics.

The latency of the proposed approaches is shown to be 2ns for the transmit plus receive side between the memory protocol layer and the bumps. The equivalent measured latency in the silicon implementation for LPDDR5 is 7.5ns and HBM3 is 6ns with similar results expected in LPDDR6 and HBM4 respectively. Thus, UCIe-Memory outperforms existing approaches from a latency perspective.

The other two metrics to be evaluated, are the bandwidth density (both linear and areal) and power efficiency. LPDDR5 and HBM3 report the data bus (DQ) bandwidth transfer only in their efficiency calculations. The same method is used for the proposed approaches for uniformity. Multiple representative demand traffic mixes are used represented as x reads and y writes for comparison.

Based on performance results, it can be inferred that CXL.Mem with optimization on symmetric UCIe offers substantially better performance compared to existing approaches (LPDDR5/6 and HBM3/4) and mostly outperforms other proposed approaches. It also has the additional benefit of leveraging the existing IPs and infrastructure the ecosystem has developed.

Future bandwidth growth can be obtained by the frequency increase of UCIe but most importantly by shrinking the bump pitches (e.g., a 2x reduction in bump pitch results in 4x improvement) which also results in better power.

The proposed UCIe-Memory approaches demonstrate substantial performance improvements compared to existing solutions, such as HBM4 and LPDDR6, across bandwidth density (linear and areal) and power efficiency metrics. UCIe-A with optimizations significantly outperforms HBM4 with the same bump pitch (55 µm) in all tested scenarios. While LPDDR6 is included for completeness, it performs worse than HBM4 due to its nature as a 2D interconnect and its external power efficiency of 2.8 pJ/b. Even with on-package optimizations, LPDDR6 cannot surpass HBM4 in performance. It should be noted that linear metrics measure bandwidth per unit length along the edge of a memory module, crucial for optimizing interconnects like UCIe or TSVs. Areal metrics focus on bandwidth per unit area, evaluating the overall efficiency of high-density memory modules like HBM.

Optimized CXL.Mem on symmetric UCIe achieves 6-10% improvement due to protocol enhancements and increased slot availability, offering competitive bandwidth density. Asymmetric UCIe with optimized CXL.Mem provides superior performance in scenarios with twice the read bandwidth over write bandwidth but suffers for other traffic mixes. CHI lags in performance due to its larger granules (20B vs. 16B for CXL.Mem) and fewer granules available for memory traffic. However, converting CHI's internal bus to optimized CXL.Mem allows it to achieve similar performance gains. Asymmetric UCIe approaches offer slightly better power efficiency in certain read-heavy traffic mixes due to granular power savings between command and data lanes, whereas symmetric UCIe approaches are constrained to turning all lanes on or off.

For UCIe-S with a 110 µm bump pitch, performance consistently surpasses LPDDR6 across all metrics and traffic mixes, even assuming LPDDR6 power efficiency to be worse than HBM4. The cost-effective UCIe-S solution delivers better results than the more expensive HBM4 by leveraging cheaper LPDDR6 dies with wire bonding. While HBM4 offers higher bandwidth per shoreline due to deeper interconnects, UCIe-S compensates by doubling the number of modules, achieving superior bandwidth density for a variety of workloads. UCIe-S's channel reach of 25 mm, with routing requirements leaving ample space for interconnects, ensures superior performance over HBM4. Additionally, UCIe-S achieves greater power efficiency across workloads, even at higher frequencies and longer reach, due to its optimized architecture.

Reliability is defined as the probability that a memory subsystem functions correctly over time. The methodology for calculating reliability and mean time to failure (MTTF) across various configurations-including no redundancy, RAID-5 at the subsystem level, and RAID-5 at the SiP level-is detailed in the analysis, along with the performance impact of RAID-5 on bandwidth and power metrics.

In one or more embodiments, reliability is defined as the probability that a memory subsystem is capable of functioning, which changes with time t. The reliability and MTTF calculation methodology for various configurations, including the baseline with no redundancy, RAID-5 at the subsystem level, and RAID-5 at the SiP level, along with the performance (bandwidth and power) impact of RAID-5, appears in the 'Methods' section.

Configurations for improving reliability and mean time to failure (MTTF) with RAID-5 demonstrate significant enhancements at both the individual memory subsystem level and across multiple subsystems within a package. In a typical setup, the compute die (SoC) connects to four memory subsystems using UCIe-Memory. Each memory subsystem consists of a logic die and multiple DRAMs, such as nine LPDDR6 dies (eight for capacity and one for spare or RAID-5 parity). In the event of a single memory die failure within a subsystem, the remaining eight dies maintain full memory capacity. However, failures of multiple dies in the same subsystem result in loss of capacity.

To further enhance reliability, the SoC may reconfigure the logic dies to form a unified memory subsystem across all four logic dies. This reconfiguration aggregates the 36 LPDDR6 dies in the package into a single memory subsystem, tolerating up to four logic die failures without impacting capacity. The system can dynamically adapt, starting with four independent memory subsystems and progressively merging into fewer subsystems as failures occur. For example, the system may transition from four independent subsystems to two subsystems (each spanning two logic dies with 18 LPDDR6 dies) after a single device failure and ultimately consolidate into one subsystem spanning all four logic dies if additional failures occur.

Memory striping with RAID-5 further distributes memory access loads evenly across all dies in a memory subsystem. Parity is striped dynamically based on memory address to ensure balanced access and improved performance. The reliability of each memory subsystem improves significantly with RAID-5 or spare DRAM. While adding a ninth die for RAID-5 parity marginally reduces reliability due to the additional component's potential for failure, the overall capacity reliability (maintaining at least eight functioning devices) is substantially improved. Furthermore, for maintaining at least half capacity, the system tolerates up to five DRAM failures in a memory subsystem, providing robust reliability over time.

At the SiP level, reliability improves dramatically when RAID-5 or sparing is applied across all memory subsystems. Without redundancy, reliability is the poorest, as the failure of two or more DRAMs in any one of the 32 devices results in system failure. Independent RAID-5 on each memory subsystem improves reliability significantly, allowing each subsystem to tolerate one device failure. Applying RAID-5 or sparing across all four memory subsystems provides the highest reliability, as it tolerates up to four memory device failures across the entire package.

MTTF also increases substantially with RAID-5 or sparing. At the individual subsystem level, MTTF improves compared to the baseline of eight devices without redundancy. At the SiP level, where 32 devices are considered, MTTF increases even further when redundancy mechanisms are applied. The results highlight that implementing RAID-5 or sparing at both individual subsystem and combined SiP levels significantly enhances reliability and MTTF. However, the SiP designer must weigh these improvements against the increased complexity of coordinating RAID-5 or sparing across multiple logic dies.

The use of spare-only configurations (without RAID-5) provides identical reliability and mean time to failure (MTTF) compared to RAID-5, provided that the system can recreate the contents of failed memory locations. This reconstruction can be achieved using hardware mechanisms, such as reading from off-package memory, or software-based solutions, such as application checkpointing or restarting.

RAID-5 or spare DRAM configurations significantly enhance reliability and MTTF, as demonstrated in various setups. Although RAID-5 involves an additional cost (e.g., 12.5% more DRAM in configurations with nine dies), it is justified for high-cost SiPs due to the substantial improvement in fault tolerance. RAID-5 introduces additional performance overhead for write operations since each write involves two reads and two writes to update parity information. To mitigate the bandwidth and power impacts, system software can selectively map critical data to RAID-5 pages.

For instance, runtime-critical data, such as operating system, BIOS, or checkpoint data, can be protected by RAID-5 to ensure high reliability. Meanwhile, frequently updated data, such as application working sets or temporary buffers, can be mapped to non-RAID-5 pages to avoid performance penalties. The underlying memory controller can manage write operations based on these page characteristics, ensuring that data not protected by RAID-5 still benefits from spare memory. In such cases, contents can be reconstructed using application-level checkpointing or error recovery methods when uncorrectable ECC errors occur.

This hybrid approach ensures high reliability and MTTF comparable to fully RAID-5-protected memory while minimizing the power and performance overhead associated with RAID-5 write operations. These configurations balance fault tolerance with efficiency, making them particularly suitable for expensive SiPs requiring both high performance and high reliability.

In one or more embodiments, this disclosure proposes a novel on-package memory interconnect using UCIe, delivering power-efficient performance. To improve bandwidth density further in the short-term for planar interconnects (2D/2.5-D), UCIe should increase the operating frequency while continuing to be bump-limited with constant power efficiency. Further bandwidth density improvement can be achieved in planar interconnects by stacking multiple UCIe ports on the same shoreline, at the expense of increased routing layers on the package, which is a reasonable trade-off. Since UCIe scales with bump-pitch, it will provide for future bandwidth demand. For example, a reduction in bump pitch from 55u to 25u will result in an increase in bandwidth density by about 5x while improving power efficiency. A combination of these techniques can help address the bandwidth demands for some time. To improve reliability, it may be needed to deploy spare DRAM, deploying either RAID-5 or data backed up by external memory, proposed in this article.

In the long run, memory needs to connect to compute using 3D hybrid bonding, which has been demonstrated to deliver several orders of magnitude higher bandwidth density in hundreds of TB/s with 1-2 orders of improvement in power efficiency (0.01 pJ/b) and subsequently adopted by UCIe 2.0 for vertical chiplets. The vertical memory with UCIe-3D may add another level in the memory hierarchy providing the highest bandwidth memory with smallest capacity, the planar memory interconnect to on-package memory proposed here provides high bandwidth (but lower than UCIe-3D) with higher capacity, and off-package memory provides even higher capacity with lower bandwidth.

The basic idea is to build on the on-package heterogeneous compute and I/O with multiple 3D chiplet stacks. Each 3D stack can have multiple (heterogeneous) compute (or communication) chiplets with memory chiplets or memory-only stacks providing high-bandwidth capacity memory on-package through planar interconnects. This move to vertical chiplets is akin to moving from a town with single floor residences to a metropolis with skyscrapers. In this architecture, each chiplet can be connected to the chiplet above or below in a (i) face-to-face, (ii) face-to-back, (iii) back-to-face, or (iv) back-to-back configuration³⁹. For scenarios (ii)-to-(iv), signals would need to travel through silicon vias (TSVs). Development of TSV manufacturing and assembly technologies that can scale with the bump pitches while introducing negligible electrical parasitic is an important research topic. Additional challenges are expected in the areas of cooling, power delivery, and reliability which needs to be investigated. Research also needs to be done in memory technology that can inherently deliver orders of magnitude higher bandwidth through multiple vertical UCIe-3D interconnects with substantially lower power to satisfy the high bandwidth demand that is expected to continue.

### Multiplexing over the UCIe Link:

Time multiplexing in the system is performed at an 8-bit granularity. The logic die facilitates the translation of commands and data between the faster UCIe clock domain and the slower device clock domain, enabling efficient communication between the compute chiplet and memory devices. In a typical configuration, the logic die aggregates multiple memory devices-such as four LPDDR6 devices in this example-behind its interface. Each memory device operates independently but is seamlessly managed through the logic die's aggregation mechanism.

For instance, the pipelining of Activate and Read commands, along with the corresponding data returns, occurs on the faster UCIe clock, operating at a data rate of 32 GT/s. Commands and data are time-multiplexed and transmitted over the UCIe link. Each color-coded segment in the communication stream corresponds to a specific LPDDR6 device, where a burst length of 24 is utilized for data transfer. This approach ensures high efficiency and bandwidth utilization while maintaining compatibility with the slower clock speeds of the memory devices.

By leveraging the UCIe's faster clock (e.g., 16 GHz for the 32 GT/s data rate), the system achieves high data throughput while accommodating the slower operating frequencies of LPDDR6 devices. This time-multiplexing technique optimizes resource utilization, ensuring smooth coordination between disparate clock domains.

It is understood that the above descriptions are for the purposes of illustration and are not meant to be limiting.

FIG. 4 illustrates a flow diagram of illustrative process 400 for an enhanced memory integration system, in accordance with one or more example embodiments of the present disclosure.

At block 402, a device may configure the compute chiplet as a system-on-a-chip (SoC) to ensure readiness for communication with memory components.

At block 404, the device may interpose logic die circuitry between the compute chiplet and memory die to facilitate efficient data transfer and processing.

At block 406, the device may operate the physical layer (PHY) at a multiple or fractional frequency of the memory die to optimize synchronization and performance.

At block 408, the device may implement a link layer with cyclic redundancy check (CRC) and retry mechanisms to ensure data integrity.

At block 410, the device may map memory protocols onto the high-speed link to facilitate effective communication between components.

At block 412, the device may provide a memory interface with the capability to connect to native or external memory resources as needed.

At block 414, the device may support symmetric and asymmetric lane configurations for read and write operations to optimize based on specific workload requirements.

In one or more embodiments, the device may include a high-speed UCIe link and may select a protocol for memory transactions from options such as CXL.mem, optimized CXL.mem, CHI, or optimized CHI. It may have a memory interface chosen from LPDDR, DDR, or HBM. The device may connect to a Type-3 CXL memory device and may couple the compute chiplet and logic die circuitry using an off-package connection. Additionally, it may configure a memory stack on the logic die using 3D packaging technology like TSV-based memory or UCIe-3D. The memory stack may comprise HBM connected using TSVs, and may also include vertically interconnected chiplets using UCIe-3D. Furthermore, the device may manage protocol translation between a SoC fabric protocol on a UCIe link and a memory-specific protocol on the memory interface.

It is understood that the above descriptions are for the purposes of illustration and are not meant to be limiting.

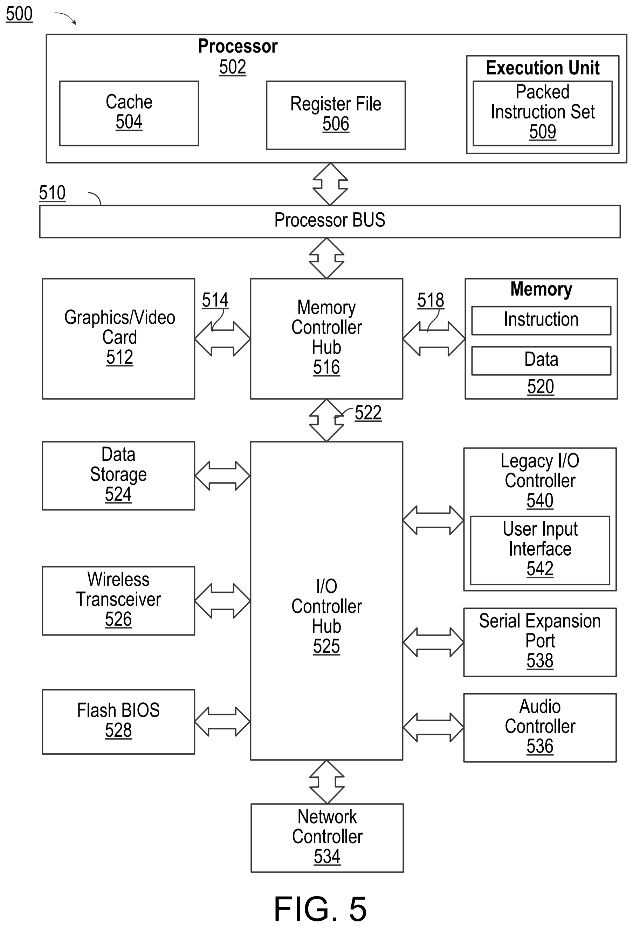

Turning to FIG. 5 , a block diagram of an exemplary computer system formed with a processor that includes execution units to execute an instruction, where one or more of the interconnects implement one or more features in accordance with one embodiment of the present disclosure is illustrated. System 500 includes a component, such as a processor 502 to employ execution units including logic to perform algorithms for process data, in accordance with the present disclosure, such as in the embodiment described herein. In one embodiment, sample system 500 executes a version of an operating system and included software, and provides corresponding graphical user interfaces, may also be used. However, embodiments of the present disclosure are not limited to any specific combination of hardware circuitry and software.

Embodiments are not limited to computer systems. Alternative embodiments of the present disclosure can be used in other devices such as handheld devices and embedded applications. Some examples of handheld devices include cellular phones, Internet Protocol devices, digital cameras, personal digital assistants (PDAs), and handheld PCs. Embedded applications can include a micro controller, a digital signal processor (DSP), system on a chip, network computers (NetPC), set-top boxes, network hubs, wide area network (WAN) switches, or any other system that can perform one or more instructions in accordance with at least one embodiment.

In this illustrated embodiment, processor 502 includes one or more execution units 508 to implement an algorithm that is to perform at least one instruction. One embodiment may be described in the context of a single processor desktop or server system, but alternative embodiments may be included in a multiprocessor system. System 500 is an example of a 'hub' system architecture. The computer system 500 includes a processor 502 to process data signals. The processor 502, as one illustrative example, includes a complex instruction set computer (CISC) microprocessor, a reduced instruction set computing (RISC) microprocessor, a very long instruction word (VLIW) microprocessor, a processor implementing a combination of instruction sets, or any other processor device, such as a digital signal processor, for example. The processor 502 is coupled to a processor bus 510 that transmits data signals between the processor 502 and other components in the system 500. The elements of system 500 (e.g. graphics accelerator 512, memory controller hub 516, memory 520, I/O controller hub 525, wireless transceiver 526, Flash BIOS 528, Network controller 534, Audio controller 536, Serial expansion port 538, I/O controller 540, etc.) perform their conventional functions that are well known to those familiar with the art.

In one embodiment, the processor 502 includes a Level 1 (L1) internal cache memory 504. Depending on the architecture, the processor 502 may have a single internal cache or multiple levels of internal caches. Other embodiments include a combination of both internal and external caches depending on the particular implementation and needs. Register file 506 is to store different types of data in various registers including integer registers, floating point registers, vector registers, banked registers, shadow registers, checkpoint registers, status registers, and instruction pointer register.

Execution unit 508, including logic to perform integer and floating point operations, also resides in the processor 502. The processor 502, in one embodiment, includes a microcode (ucode) ROM to store microcode, which when executed, is to perform algorithms for certain macroinstructions or handle complex scenarios. Here, microcode is potentially updateable to handle logic bugs/fixes for processor 502. For one embodiment, execution unit 508 includes logic to handle a packed instruction set 509. By including the packed instruction set 509 in the instruction set of a general-purpose processor 502, along with associated circuitry to execute the instructions, the operations used by many multimedia applications may be performed using packed data in a general-purpose processor 502. Thus, many multimedia applications are accelerated and executed more efficiently by using the full width of a processor's data bus for performing operations on packed data. This potentially eliminates the need to transfer smaller units of data across the processor's data bus to perform one or more operations, one data element at a time.

Alternate embodiments of an execution unit 508 may also be used in micro controllers, embedded processors, graphics devices, DSPs, and other types of logic circuits. System 500 includes a memory 520. Memory 520 includes a dynamic random access memory (DRAM) device, a static random access memory (SRAM) device, flash memory device, or other memory device. Memory 520 stores instructions and/or data represented by data signals that are to be executed by the processor 502.

Note that any of the aforementioned features or aspects of the present disclosure and solutions may be utilized on one or more interconnect illustrated in FIG. 5. For example, an on-die interconnect (ODI), which is not shown, for coupling internal units of processor 502 implements one or more aspects of the embodiments described above. Or the embodiments may be associated with a processor bus 510 (e.g. other known high performance computing interconnect), a high bandwidth memory path 518 to memory 520, a point-to-point link to graphics accelerator 512 (e.g. a Peripheral Component Interconnect express (PCIe) compliant fabric), a controller hub interconnect 522, an I/O or other interconnect (e.g. USB, PCI, PCIe) for coupling the other illustrated components. Some examples of such components include the audio controller 536, firmware hub (flash BIOS) 528, wireless transceiver 526, data storage 524, legacy I/O controller 510 containing user input and keyboard interfaces 542, a serial expansion port 538 such as Universal Serial Bus (USB), and a network controller 534. The data storage device 524 can comprise a hard disk drive, a floppy disk drive, a CD-ROM device, a flash memory device, or other mass storage device.

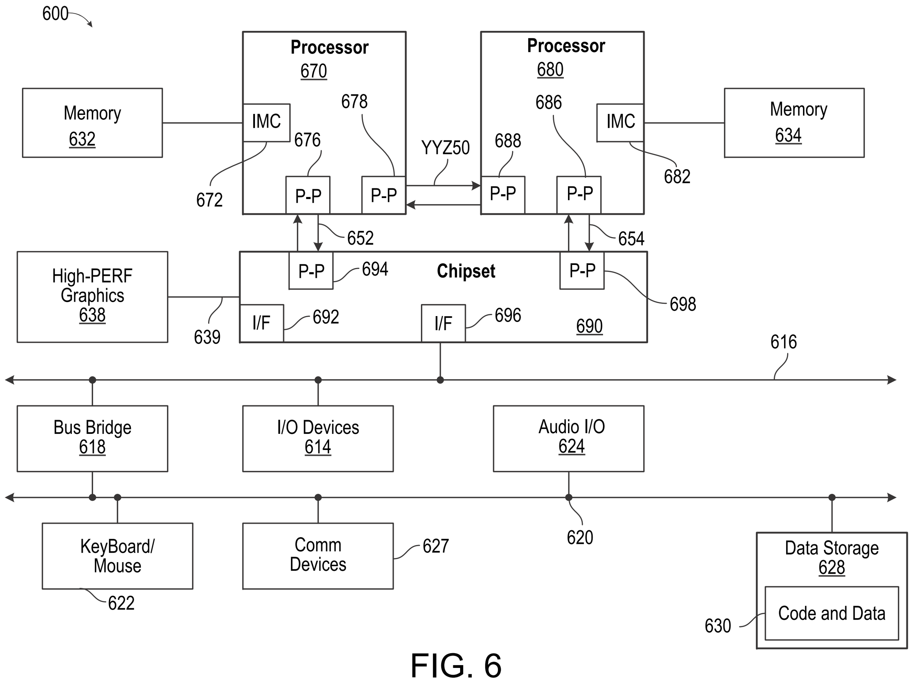

Referring now to FIG. 6, shown is a block diagram of a second system 600 in accordance with an embodiment of the present disclosure. As shown in FIG. 6 , multiprocessor system 600 is a point-to-point interconnect system, and includes a first processor 670 and a second processor 680 coupled via a point-to-point interconnect 650. Each of processors 670 and 680 may be some version of a processor. In one embodiment, 652 and 654 are part of a serial, point-to-point coherent interconnect fabric, such as a high-performance architecture.

While shown with only two processors, 670, 680, it is to be understood that the scope of the present disclosure is not so limited. In other embodiments, one or more additional processors may be present in a given processor.

Processors 670 and 680 are shown including integrated memory controller units 672 and 682, respectively. Processor 670 also includes as part of its bus controller units point-to-point (P-P) interfaces 676 and 678; similarly, second processor 680 includes P-P interfaces 686 and 688. Processors 670, 680 may exchange information via a point-to-point (P-P) interface 650 using P-P interface circuits 678, 688. As shown in FIG. 6 , IMCs 672 and 682 couple the processors to respective memories, namely a memory 632 and a memory 634, which may be portions of main memory locally attached to the respective processors.

Processors 670, 680 each exchange information with a chipset 690 via individual P-P interfaces 652, 654 using point to point interface circuits 676, 694, 686, 698. Chipset 690 also exchanges information with a high-performance graphics circuit 638 via an interface circuit 692 along a high-performance graphics interconnect 639.

A shared cache (not shown) may be included in either processor or outside of both processors; yet connected with the processors via P-P interconnect, such that either or both processors' local cache information may be stored in the shared cache if a processor is placed into a low power mode.

Chipset 690 may be coupled to a first bus 616 via an interface 696. In one embodiment, first bus 616 may be a Peripheral Component Interconnect (PCI) bus, or a bus such as a PCI Express bus or another third generation I/O interconnect bus, although the scope of the present disclosure is not so limited.

As shown in FIG. 6, various I/O devices 614 are coupled to first bus 616, along with a bus bridge 618 which couples first bus 616 to a second bus 620. In one embodiment, second bus 620 includes a low pin count (LPC) bus. Various devices are coupled to second bus 620 including, for example, a keyboard and/or mouse 622, communication devices 627 and a storage unit 628 such as a disk drive or other mass storage device which often includes instructions/code and data 630, in one embodiment. Further, an audio I/O 624 is shown coupled to second bus 620. Note that other architectures are possible, where the included components and interconnect architectures vary. For example, instead of the point-to-point architecture of FIG. 6, a system may implement a multi-drop bus or other such architecture.

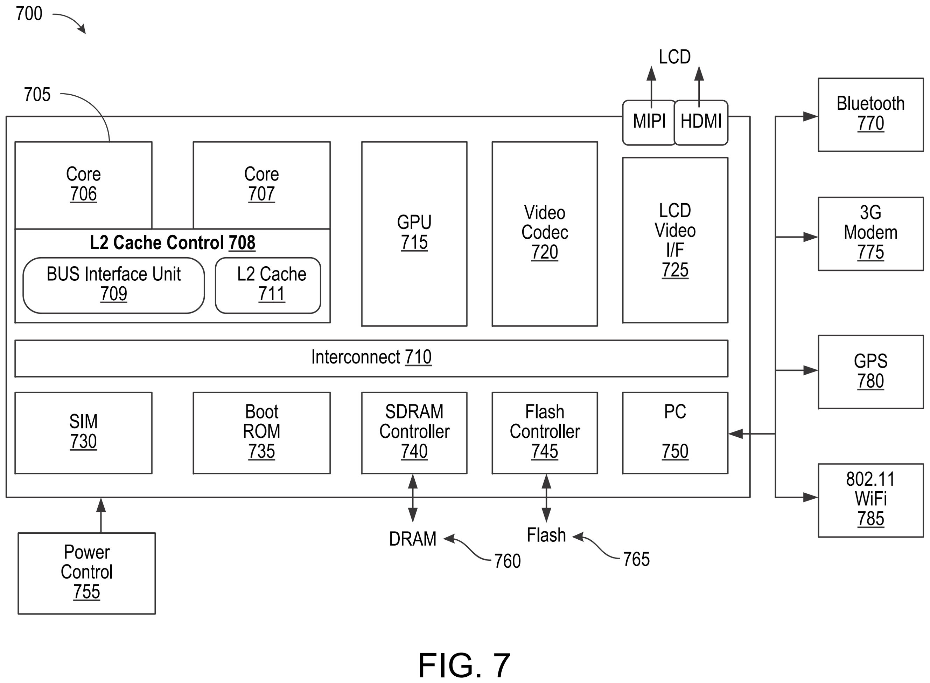

Turning next to FIG. 7, an embodiment of a system on-chip (SOC) design in accordance with the above disclosure is depicted. As a specific illustrative example, SOC 700 is included in user equipment (UE). In one embodiment, UE refers to any device to be used by an end-user to communicate, such as a hand-held phone, smartphone, tablet, ultrathin notebook, notebook with broadband adapter, or any other similar communication device. Often a UE connects to a base station or node, which potentially corresponds in nature to a mobile station (MS) in a GSM network.

Here, SOC 700 includes 2 cores-706 and 707. Similar to the discussion above, cores 706 and 707 may conform to an Instruction Set Architecture, such as an Intel^{®} Architecture Core^{™}-based processor, an Advanced Micro Devices, Inc. (AMD) processor, a MIPS-based processor, an ARM-based processor design, or a customer thereof, as well as their licensees or adopters. Cores 706 and 707 are coupled to cache control 708 that is associated with bus interface unit 709 and L2 cache 711 to communicate with other parts of system 700. Interconnect 710 includes an on-chip interconnect, such as an IOSF, AMBA, or other interconnect discussed above, which potentially implements one or more aspects described herein.

Interface 710 provides communication channels to the other components, such as a Subscriber Identity Module (SIM) 730 to interface with a SIM card, a boot ROM 735 to hold boot code for execution by cores 706 and 707 to initialize and boot SOC 700, a SDRAM controller 740 to interface with external memory (e.g. DRAM 760), a flash controller 745 to interface with non-volatile memory (e.g. Flash 765), a peripheral control 750 (e.g. Serial Peripheral Interface) to interface with peripherals, video codecs 720 and Video interface 725 to display and receive input (e.g. touch enabled input), GPU 715 to perform graphics related computations, etc. Any of these interfaces may incorporate aspects of the embodiments described herein.

In addition, the system illustrates peripherals for communication, such as a Bluetooth module 770, 3G modem 775, GPS 785, and WiFi 785. Note as stated above, a UE includes a radio for communication. As a result, these peripheral communication modules are not all required. However, in the UE some form of radio for external communication is to be included.

Some examples may be described using the expression "in one example" or "an example" along with their derivatives. These terms mean that a particular feature, structure, or characteristic described in connection with the example is included in at least one example. The appearances of the phrase "in one example" in various places in the specification are not necessarily all referring to the same example.

Some examples may be described using the expressions "coupled" and "connected" along with their derivatives. These terms are not necessarily intended as synonyms for each other. For example, descriptions using the terms "connected" and/or "coupled" may indicate that two or more elements are in direct physical or electrical contact with each other. The term "coupled," however, may also mean that two or more elements are not in direct contact with each other, yet still co-operate or interact with each other.

In addition, in the foregoing Detailed Description, various features are grouped together in a single example to streamline the disclosure. This method of disclosure is not to be interpreted as reflecting an intention that the claimed examples require more features than are expressly recited in each claim. Rather, as the following claims reflect, the inventive subject matter lies in less than all features of a single disclosed example. Thus, the following claims are hereby incorporated into the Detailed Description, with each claim standing on its own as a separate example. In the appended claims, the terms "including" and "in which" are used as the plain-English equivalents of the respective terms "comprising" and "wherein," respectively. Moreover, the terms "first," "second," "third," and so forth, are used merely as labels and are not intended to impose numerical requirements on their objects.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

A data processing system suitable for storing and/or executing program code will include at least one processor coupled directly or indirectly to memory elements through a system bus. The memory elements can include local memory employed during actual execution of the program code, bulk storage, and cache memories which provide temporary storage of at least some program code to reduce the number of times code must be retrieved from bulk storage during execution. The term "code" covers a broad range of software components and constructs, including applications, drivers, processes, routines, methods, modules, firmware, microcode, and subprograms. Thus, the term "code" may be used to refer to any collection of instructions which, when executed by a processing system, perform a desired operation or operations.

Logic circuitry, devices, and interfaces herein described may perform functions implemented in hardware and implemented with code executed on one or more processors. Logic circuitry refers to the hardware or the hardware and code that implements one or more logical functions. Circuitry is hardware and may refer to one or more circuits. Each circuit may perform a particular function. A circuit of the circuitry may comprise discrete electrical components interconnected with one or more conductors, an integrated circuit, a chip package, a chipset, memory, or the like. Integrated circuits include circuits created on a substrate such as a silicon wafer and may comprise components. And integrated circuits, processor packages, chip packages, and chipsets may comprise one or more processors.

Processors may receive signals such as instructions and/or data at the input(s) and process the signals to generate the at least one output. While executing code, the code changes the physical states and characteristics of transistors that make up a processor pipeline. The physical states of the transistors translate into logical bits of ones and zeros stored in registers within the processor. The processor can transfer the physical states of the transistors into registers and transfer the physical states of the transistors to another storage medium.

A processor may comprise circuits to perform one or more sub-functions implemented to perform the overall function of the processor. One example of a processor is a state machine or an application-specific integrated circuit (ASIC) that includes at least one input and at least one output. A state machine may manipulate the at least one input to generate the at least one output by performing a predetermined series of serial and/or parallel manipulations or transformations on the at least one input.

The logic as described above may be part of the design for an integrated circuit chip. The chip design is created in a graphical computer programming language, and stored in a computer storage medium or data storage medium (such as a disk, tape, physical hard drive, or virtual hard drive such as in a storage access network). If the designer does not fabricate chips or the photolithographic masks used to fabricate chips, the designer transmits the resulting design by physical means (e.g., by providing a copy of the storage medium storing the design) or electronically (e.g., through the Internet) to such entities, directly or indirectly. The stored design is then converted into the appropriate format (e.g., GDSII) for the fabrication.

The resulting integrated circuit chips can be distributed by the fabricator in raw wafer form (that is, as a single wafer that has multiple unpackaged chips), as a bare die, or in a packaged form. In the latter case, the chip is mounted in a single chip package (such as a plastic carrier, with leads that are affixed to a motherboard or other higher-level carrier) or in a multichip package (such as a ceramic carrier that has either or both surface interconnections or buried interconnections). In any case, the chip is then integrated with other chips, discrete circuit elements, and/or other signal processing devices as part of either (a) an intermediate product, such as a processor board, a server platform, or a motherboard, or (b) an end product.

The word "exemplary" is used herein to mean "serving as an example, instance, or illustration." Any embodiment described herein as "exemplary" is not necessarily to be construed as preferred or advantageous over other embodiments. The terms "computing device," "user device ," "communication station ," "station," "handheld device," "mobile device," "wireless device" and "user equipment" (UE) as used herein refers to a wireless communication device such as a cellular telephone, a smartphone, a tablet, a netbook, a wireless terminal, a laptop computer, a femtocell, a high data rate (HDR) subscriber station, an access point, a printer, a point of sale device, an access terminal, or other personal communication system (PCS) device. The device may be either mobile or stationary.

As used within this document, the term "communicate" is intended to include transmitting, or receiving, or both transmitting and receiving. This may be particularly useful in claims when describing the organization of data that is being transmitted by one device and received by another, but only the functionality of one of those devices is required to infringe the claim. Similarly, the bidirectional exchange of data between two devices (both devices transmit and receive during the exchange) may be described as "communicating," when only the functionality of one of those devices is being claimed. The term "communicating" as used herein with respect to a wireless communication signal includes transmitting the wireless communication signal and/or receiving the wireless communication signal. For example, a wireless communication unit, which is capable of communicating a wireless communication signal, may include a wireless transmitter to transmit the wireless communication signal to at least one other wireless communication unit, and/or a wireless communication receiver to receive the wireless communication signal from at least one other wireless communication unit.

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, network interface cards, and/or the like.

As used herein, unless otherwise specified, the use of the ordinal adjectives "first," "second," "third," etc., to describe a common object, merely indicates that different instances of like objects are being referred to and are not intended to imply that the objects so described must be in a given sequence, either temporally, spatially, in ranking, or in any other manner.

The term "appliance," "computer appliance," or the like, as used herein refers to a computer device or computer system with program code (e.g., software or firmware) that is specifically designed to provide a specific computing resource. A "virtual appliance" is a virtual machine image to be implemented by a hypervisor-equipped device that virtualizes or emulates a computer appliance or otherwise is dedicated to provide a specific computing resource.

The term "resource" as used herein refers to a physical or virtual device, a physical or virtual component within a computing environment, and/or a physical or virtual component within a particular device, such as computer devices, mechanical devices, memory space, processor/CPU time, processor/CPU usage, processor and accelerator loads, hardware time or usage, electrical power, input/output operations, ports or network sockets, channel/link allocation, throughput, memory usage, storage, network, database and applications, workload units, and/or the like. A "hardware resource" may refer to compute, storage, and/or network resources provided by physical hardware element(s). A "virtualized resource" may refer to compute, storage, and/or network resources provided by virtualization infrastructure to an application, device, system, etc. The term "network resource" or "communication resource" may refer to resources that are accessible by computer devices/systems via a communications network. The term "system resources" may refer to any kind of shared entities to provide services, and may include computing and/or network resources. System resources may be considered as a set of coherent functions, network data objects or services, accessible through a server where such system resources reside on a single host or multiple hosts and are clearly identifiable.

The term "channel" as used herein refers to any transmission medium, either tangible or intangible, which is used to communicate data or a data stream. The term "channel" may be synonymous with and/or equivalent to "communications channel," "data communications channel," "transmission channel," "data transmission channel," "access channel," "data access channel," "link," "data link," "carrier," "radiofrequency carrier," and/or any other like term denoting a pathway or medium through which data is communicated. Additionally, the term "link" as used herein refers to a connection between two devices through a RAT for the purpose of transmitting and receiving information.

The terms "instantiate," "instantiation," and the like as used herein refers to the creation of an instance. An "instance" also refers to a concrete occurrence of an object, which may occur, for example, during execution of program code.

The terms "coupled," "communicatively coupled," along with derivatives thereof are used herein. The term "coupled" may mean two or more elements are in direct physical or electrical contact with one another, may mean that two or more elements indirectly contact each other but still cooperate or interact with each other, and/or may mean that one or more other elements are coupled or connected between the elements that are said to be coupled with each other. The term "directly coupled" may mean that two or more elements are in direct contact with one another. The term "communicatively coupled" may mean that two or more elements may be in contact with one another by a means of communication including through a wire or other interconnect connection, through a wireless communication channel or link, and/or the like.

The term "information element" refers to a structural element containing one or more fields. The term "field" refers to individual contents of an information element, or a data element that contains content.

The following examples pertain to further embodiments.

Example 1 may include a system comprising a compute chiplet configured as a system-on-a-chip (SoC), at least one memory die, a logic die interposed between the compute chiplet and the memory die, and a module for memory communication over a high-speed link. The module may comprise a physical layer (PHY) configured to operate at a frequency that is a multiple or fractional value of the frequency of the memory die, a link layer including cyclic redundancy check (CRC) and retry mechanisms, and a protocol layer for mapping memory protocols onto the high-speed link. The system may further comprise a memory interface selected from at least one of a native memory interface or a link to an external memory device. The module may be configured to support lane configurations optimized for read and write operations based on workload requirements, including symmetric and asymmetric configurations, and to enable simultaneous read and write operations to different portions of the memory die by supporting parallel signal routing.

Example 2 may include the system of example 1 and/or some other example herein, wherein the high-speed link comprises a Universal Chiplet Interconnect Express (UCle) link.

Example 3 may include the system of example 1 and/or some other example herein, wherein a protocol for memory transactions is selected from at least one of a Compute Express Link memory protocol (CXL.mem), an optimized version of CXL.mem, Cache Coherent Interconnect for accelerators (CHI), or an optimized version of CHI.

Example 4 may include the system of example 1 and/or some other example herein, wherein the memory interface is selected from at least one of Low Power Double Data Rate (LPDDR), Double Data Rate (DDR), or High Bandwidth Memory (HBM).

Example 5 may include the system of example 3 and/or some other example herein, wherein the high-speed link connects to a Type-3 CXL memory device.

Example 6 may include the system of example 1 and/or some other example herein, wherein the compute chiplet and the logic die are connected using an off-package connection.

Example 7 may include the system of example 1 and/or some other example herein, wherein a memory stack on the logic die is configured using 3D packaging technology selected from Through-Silicon Via (TSV)-based memory or UCIe-3D.

Example 8 may include the system of example 7 and/or some other example herein, wherein the memory stack comprises High Bandwidth Memory (HBM) connected to the logic die using TSVs.

Example 9 may include the system of example 7 and/or some other example herein, wherein the memory stack comprises vertically interconnected chiplets using UCIe-3D packaging technology.

Example 10 may include the system of example 3 and/or some other example herein, wherein the logic die manages protocol translation between a SoC fabric protocol on a UCIe link and a memory-specific protocol on the memory interface.

Example 11 may include a system for reliability, availability, and serviceability (RAS) in on-package memory, comprising: a compute chiplet configured as a System-on-a-Chip (SoC); a logic die interposed between the compute chiplet and memory; error-detection and correction mechanisms, including parity checks and Error-Correcting Codes (ECC); failover and redundancy mechanisms to maintain availability in the event of hardware faults; and diagnostics and reporting mechanisms for serviceability, including event logging and error notifications over a sideband interface. The system may include a high-speed link connecting the compute chiplet to the logic die, configured to transmit error and status information alongside data.

Example 12 may include the system of example 11 and/or some other example herein, wherein the high-speed link comprises a Universal Chiplet Interconnect Express (UCIe) link.

Example 13 may include the system of example 11 and/or some other example herein, wherein failover mechanisms include redundant data paths within the logic die.

Example 14 may include the system of example 11 and/or some other example herein, wherein serviceability features include sideband interfaces for diagnostics, configuration, and error reporting.

Example 15 may include the system of example 11 and/or some other example herein, wherein event logging includes recording memory access patterns to predict failures and trigger preemptive maintenance.

Example 16 may include the system of example 11 and/or some other example herein, wherein error notifications use the sideband interface to provide fault information to the compute chiplet.

Example 17 may include the system of example 11 and/or some other example herein, wherein the logic die dynamically reallocates memory resources during a fault condition.

Example 18 may include the system of example 11 and/or some other example herein, wherein reliability features include periodic memory scrubbing.

Example 19 may include the system of example 11 and/or some other example herein, wherein serviceability features include hot-swappable memory modules managed by the logic die through the high-speed link.

Example 20 may include a method for managing memory migration and caching between on-package and off-package memory, comprising: establishing a communication link between a compute chiplet and a logic die through a high-speed link; connecting the logic die to on-package memory through a memory interface; treating the on-package memory as a memory-side cache for the off-package memory; and dynamically migrating memory pages between the on-package memory and the off-package memory based on memory access patterns.

Example 21 may include one or more non-transitory computer-readable media comprising instructions to cause an electronic device, upon execution of the instructions by one or more processors of the electronic device, to perform one or more elements of a method described in or related to any of examples 1-20, or any other method or process described herein.

Example 22 may include an apparatus comprising logic, modules, and/or circuitry to perform one or more elements of a method described in or related to any of examples 1-20, or any other method or process described herein.

Example 23 may include a method, technique, or process as described in or related to any of examples 1-20, or portions or parts thereof.

Example 24 may include an apparatus comprising: one or more processors and one or more computer readable media comprising instructions that, when executed by the one or more processors, cause the one or more processors to perform the method, techniques, or process as described in or related to any of examples 1-20, or portions thereof.

Embodiments according to the disclosure are in particular disclosed in the attached claims directed to a method, a storage medium, a device and a computer program product, wherein any feature mentioned in one claim category, e.g., method, can be claimed in another claim category, e.g., system, as well. The dependencies or references back in the attached claims are chosen for formal reasons only. However, any subject matter resulting from a deliberate reference back to any previous claims (in particular multiple dependencies) can be claimed as well, so that any combination of claims and the features thereof are disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Certain aspects of the disclosure are described above with reference to block and flow diagrams of systems, methods, apparatuses, and/or computer program products according to various implementations. It will be understood that one or more blocks of the block diagrams and flow diagrams, and combinations of blocks in the block diagrams and the flow diagrams, respectively, may be implemented by computer-executable program instructions. Likewise, some blocks of the block diagrams and flow diagrams may not necessarily need to be performed in the order presented, or may not necessarily need to be performed at all, according to some implementations.

These computer-executable program instructions may be loaded onto a special-purpose computer or other particular machine, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable storage media or memory that may direct a computer or other programmable data processing apparatus to function in a particular manner, such that the instructions stored in the computer-readable storage media produce an article of manufacture including instruction means that implement one or more functions specified in the flow diagram block or blocks. As an example, certain implementations may provide for a computer program product, comprising a computer-readable storage medium having a computer-readable program code or program instructions implemented therein, said computer-readable program code adapted to be executed to implement one or more functions specified in the flow diagram block or blocks. The computer program instructions may also be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, may be implemented by special-purpose, hardware-based computer systems that perform the specified functions, elements or steps, or combinations of special-purpose hardware and computer instructions.

Conditional language, such as, among others, "can," "could," "might," or "may," unless specifically stated otherwise, or otherwise understood within the context as used, is generally intended to convey that certain implementations could include, while other implementations do not include, certain features, elements, and/or operations. Thus, such conditional language is not generally intended to imply that features, elements, and/or operations are in any way required for one or more implementations or that one or more implementations necessarily include logic for deciding, with or without user input or prompting, whether these features, elements, and/or operations are included or are to be performed in any particular implementation.

Many modifications and other implementations of the disclosure set forth herein will be apparent having the benefit of the teachings presented in the foregoing descriptions and the associated drawings. Therefore, it is to be understood that the disclosure is not to be limited to the specific implementations disclosed and that modifications and other implementations are intended to be included within the scope of the appended claims. Although specific terms are employed herein, they are used in a generic and descriptive sense only and not for purposes of limitation.

## Claims

1. A system for interconnecting a compute chiplet and on-package memory, comprising:
a compute chiplet configured as a system-on-a-chip (SoC);
at least one memory die;
a logic die circuity interposed between the compute chiplet and the memory die;
a memory circuitry for memory communication over a high-speed link, comprising:
a physical layer (PHY) configured to operate at a frequency that is a multiple or fractional value of the frequency of the memory die;
a link layer including cyclic redundancy check (CRC) and retry mechanisms; and
a protocol layer for mapping memory protocols onto the high-speed link;
wherein a memory interface comprises at least one of a native memory interface or a link to an external memory;
wherein the memory circuitry is configured to support lane configurations for read and write operations based on workload requirements, including symmetric and asymmetric configurations.

2. The system of claim 1, wherein the high-speed link comprises a universal chiplet interconnect express (UCIe) link.

3. The system of claim 1, wherein a protocol for memory transactions is selected from at least one of a compute express link memory protocol (CXL.mem), an optimized version of CXL.mem, cache coherent interconnect for accelerators (CHI), or an optimized version of CHI.

4. The system of claim 1, wherein the memory interface is selected from at least one of low power double data rate (LPDDR), double data rate (DDR), or high bandwidth memory (HBM).

5. The system of claim 3, wherein the high-speed link connects to a Type-3 CXL memory device.

6. The system of claim 1, wherein the compute chiplet and the logic die circuitry are coupled connected using an off-package connection.

7. The system of claim 1, wherein a memory stack on the logic die circuitry is configured using 3D packaging technology selected from through-silicon via (TSV)-based memory or UCIe-3D.

8. The system of any one of claims 1-7, wherein the memory stack comprises high bandwidth memory (HBM) connected to the logic die circuitry using TSVs.

9. A system, comprising:
a compute chiplet configured as a system-on-a-chip;
a logic die circuity interposed between the compute chiplet and memory, the logic die circuity comprising:
error-detection and correction mechanisms, including parity checks and error-correcting codes (ECC);
failover and redundancy mechanisms to maintain availability in an event of hardware faults; and
diagnostics and reporting mechanisms, including event logging and error notifications over a sideband interface; and
a high-speed link coupling the compute chiplet to the logic die circuitry , configured to transmit error and status information.

10. The system of claim 9, wherein the high-speed link comprises a universal chiplet interconnect express (UCIe) link.

11. The system of claim 9, wherein failover mechanisms include redundant data paths within the logic die circuitry.

12. The system of claim 9, wherein serviceability features include sideband interfaces for diagnostics, configuration, and error reporting.

13. The system of claim 9, wherein event logging includes recording memory access patterns to predict failures and trigger preemptive maintenance.

14. The system of any one of claims 9-13, wherein serviceability features include hot-swappable memory managed by the logic die circuitry through the high-speed link.

15. A method, comprising:
establishing a communication link between a compute chiplet and a logic die circuitry through a high-speed link;
coupling the logic die circuitry to on-package memory through a memory interface;
treating the on-package memory as a memory-side cache for an off-package memory; and
migrating memory pages between the on-package memory and the off-package memory based on memory access patterns.
